# EUROPÄISCHE PATENTSCHRIFT

(11) **EP 2 866 343 B1**
(45) Veröffentlichungstag und Bekanntmachung des Hinweises auf die Patenterteilung: **26.06.2019**
(21) Anmeldenummer: 14189569.8
(22) Anmeldetag: 20.10.2014
(51) Int. Cl.: H02P 25/18

(54) **Vakuumpumpe**
Vacuum pump
Pompe à vide

(30) Priorität: 21.10.2013 DE 102013221342
(43) Veröffentlichungstag der Anmeldung: 29.04.2015
(73) Patentinhaber: PFEIFFER VACUUM GMBH, 35614 Asslar (DE)
(72) Erfinder: Koch, Bernhard, 35799 Barig-Selbenhausen (DE)
(74) Vertreter: Manitz Finsterwald Patent- und Rechtsanwaltspartnerschaft mbB

(56) Entgegenhaltungen:
- EP-A2- 2 573 907
- DE-A1-102007 020 706
- DE-A1-102007 040 725
- DE-T2- 69 216 062
- DE-T2- 69 825 552
- JP-A- 2012 228 065
- US-A1- 2012 027 583
- Klaus Fuest: "ELEKTRISCHE MASCHINEN UND ANTRIEBE" In: "ELEKTRISCHE MASCHINEN UND ANTRIEBE", 31 December 1989 (1989-12-31), VIEWEG, XP055462758, ISBN: 978-3-528-24076-9 pages 95-97, * page 95 - page 97 *

## Beschreibung

Die vorliegende Erfindung betrifft eine Vakuumpumpe, insbesondere Turbomolekularpumpe, mit einem Elektromotor, der mehrere Spulen zur Erzeugung eines magnetischen Antriebsfelds und mehrere elektrische Leiter, welche wenigstens einen elektrischen Phasenleiter umfassen, zur Stromversorgung der Spulen aufweist.

Elektromotoren werden zum Beispiel in Vakuumpumpen eingesetzt, um den Rotor der Vakuumpumpe zur Bereitstellung einer Pumpfunktion drehend anzutreiben. Bei bekannten Elektromotoren besteht das Problem, dass nicht bei jeder Drehzahl des Elektromotors eine hohe Motorleistung bei gleichzeitig geringen elektrischen Verlusten bereitgestellt werden kann, da die Motorleistung und die elektrischen Verluste von der Drehzahl abhängen. Typischerweise kann mit einem Elektromotor deshalb nur einem begrenzten Drehzahlbereich eine hohe Motorleistung erreicht werden. Insbesondere steigt die drehzahlabhängige Motorleistung eines Elektromotors in einem unteren Drehzahlbereich zunächst linear mit der Drehzahl an und bleibt dann für einen darauffolgenden oberen Drehzahlbereich im Wesentlichen konstant oder sinkt mit weiter zunehmender Drehzahl.

Wenn man bei einem Elektromotor Spulen mit einer größeren Anzahl von Windungen pro Spule verwendet, wird dadurch in dem unteren Drehzahlbereich eine höhere Motorleistung und ein steilerer Anstieg der Motorleistung mit der Drehzahl erreicht, wodurch die Hochlaufzeit des Elektromotors, das heißt die Zeit bis zum Erreichen der Nenndrehzahl, reduziert werden kann. Die Verwendung von Spulen mit mehr Windungen pro Spule führt allerdings dazu, dass die bei dem Betrieb des Elektromotors infolge der Drehung des Rotors in den Spulen induzierte Gegenspannung, welche auch als Gegen-EMK bezeichnet wird, ansteigt. Die erhöhte Gegen-EMK führt zu höheren elektrischen Verlusten sowie zu einer verringerten Motorleistung.

Die DE 692 16 062 T2 beschreibt einen Elektromotor, der mehrere Spulen zur Erzeugung eines magnetischen Antriebsfelds, mehrere elektrische Leiter, welche wenigstens einen elektrischen Phasenleiter umfassen, zur Stromversorgung der Spulen und eine Schaltungsanordnung zur Verbindung der Spulen mit den elektrischen Leitern aufweist. Die Schaltungsanordnung ist zwischen unterschiedlichen Schaltzuständen umschaltbar, in denen die elektrischen Leiter jeweils stromversorgend mit den Spulen verbunden sind. Dabei sind die elektrischen Leiter und die Spulen in den unterschiedlichen Schaltzuständen unterschiedlich miteinander verschaltet.

Die DE 10 2007 040 725 A1 beschreibt einen ähnlichen Elektromotor, bei dem mehrere Spulen zwischen einer Reihen- und einer Parallelschaltung umschaltbar sind, um die unterschiedlichen Schaltzustände einzustellen.

In der EP 2 573 907 A2 ist ferner ein Elektromotor beschrieben, bei dem äußere Statorwindungen als Hauptspulen an einem äußeren Kern und Steuerspulen an einem inneren Kern innerhalb der Hauptspulen angeordnet sind.

Die JP 2012 228065 A beschreibt einen Elektromotor mit einer ersten und zweiten Gruppe von Windungen bzw. Spulen, die von einer jeweiligen Stromquelle unabhängig voneinander mit Strom versorgt werden.

Ferner ist in der US 2012/0027583 A1 eine Vakuumpumpe beschrieben, die einen Rotor, der eine Rotorwelle aufweist, einen Motorraum, in den sich die Rotorwelle hinein erstreckt, und einen Elektromotor umfasst, der in dem Motorraum angeordnet und zum drehenden Antreiben des Rotors vorgesehen ist. Ein Läufer des Elektromotors ist durch die Rotorwelle gebildet.

Aufgabe der Erfindung ist es, eine Vakuumpumpe mit einem Elektromotor zu schaffen, welcher über einen großen Drehzahlbereich hinweg eine hohe Motorleistung bei gleichzeitig geringen elektrischen Leistungsverlusten bereitstellt. Aufgabe der Erfindung ist ferner die Angabe eines Verfahrens zum Ansteuern einer Vakuumpumpe mit einem Elektromotor, welches über einen großen Drehzahlbereich hinweg eine hohe Motorleistung bei gleichzeitig geringen Leistungsverlusten des Elektromotors gewährleistet.

Die Aufgabe wird durch eine Vakuumpumpe mit den Merkmalen des Anspruchs 1 gelöst.

### Ausführungsbeispiele

Der Elektromotor der Vakuumpumpe umfasst mehrere Spulen zur Erzeugung eines magnetischen Antriebsfelds, mehrere elektrische Leiter, welche wenigstens einen elektrischen Phasenleiter umfassen, zur Stromversorgung der Spulen und eine Schaltungsanordnung zur Verbindung der Spulen mit den elektrischen Leitern. Die Schaltungsanordnung ist zwischen unterschiedlichen Schaltzuständen umschaltbar, in denen die elektrischen Leiter jeweils stromversorgend mit den Spulen verbunden sind, wobei die elektrischen Leiter und die Spulen in den unterschiedlichen Schaltzuständen unterschiedlich miteinander verschaltet sind.

Die elektrischen Leiter und Spulen sind erfindungsgemäß zwischen einer Sterntopologie einerseits und einer Dreiecktopologie andererseits umschaltbar. Durch Umschalten der Schaltungsanordnung kann folglich die Topologie der zur Stromversorgung der Spulen dienenden Verschaltung zwischen den elektrischen Leitern und den Spulen umgeschaltet werden. Dadurch lässt sich während des laufenden Betriebs das Verhalten und insbesondere das Leistungsverhalten des Elektromotors derart anpassen, dass bei der jeweils aktuellen Drehzahl stets gleichzeitig eine hohe Motorleistung und geringe Leistungsverluste gewährleistet werden. Der Elektromotor gewährleistet somit über einen großen Drehzahlbereich hinweg, welcher lediglich durch das Spektrum der einstellbaren Verschaltungen begrenzt ist, eine hohe Motorleistung bei geringen Leistungsverlusten. Da die Schaltungsanordnung einfach mit Hilfe von entsprechenden elektrischen Schaltern zwischen den elektrischen Leitern und den Spulen realisiert werden kann, kann der Elektromotor außerdem mit sehr geringem Aufwand hergestellt werden.

Wie nachfolgend im Einzelnen erläutert, kann die durch das Umschalten bewirkte Veränderung der Verschaltung der elektrischen Leitern und der Spulen darin bestehen, dass durch das Umschalten eine oder mehrere Spulen zu- oder abgeschaltet werden, d.h. dass insbesondere eine oder mehrere Spulen in einem Schaltzustand in einen Lastkreis eines Phasenleiters eingebunden und von diesem bestrombar sind, während dieselben Spulen in einem anderen Schaltzustand abgeschaltet und nicht bestrombar sind. Ebenso können verschiedene Spulen in verschiedenen Schaltzuständen in verschiedenen Lastkreisen eingebunden sein oder in verschiedener Weise mit anderen Spulen verschaltet, das heißt insbesondere in Serie oder parallel geschaltet, sein. Ferner kann die Verschaltung im Hinblick auf die Polung zumindest einer Spule geändert werden. Da die Orientierung des von einer Spule erzeugten Magnetfelds im Raum von der Polung der Spule bzw. dem Drehsinn des die Spule durchfließenden Stromes abhängt, beeinflusst auch die letztgenannte Maßnahme das Verhalten des Motors.

Die Spulen eines Spulenpaares sind so ausgebildet und angeordnet, dass sich die von den Spulen erzeugten Magnetfelder zumindest in einem Schaltzustand, in dem die beiden Spulen in einen gemeinsamen Lastkreis eingebunden sind, verstärken. Die Spulen sind dazu koaxial zueinander und in axialer Richtung zumindest teilweise überlappend nebeneinander oder ineinander oder in axialer Richtung unmittelbar aufeinander folgend angeordnet.

Vorteilhafte Ausführungsformen der Erfindung sind in den Unteransprüchen beschrieben.

Bevorzugt ist durch das Umschalten der Schaltungsanordnung die Leistungscharakteristik des Elektromotors veränderbar. Unter der Leistungscharakteristik wird der drehzahlabhängige Verlauf der Motorleistung und der Verlustleistung verstanden. Durch das Umschalten der Leistungscharakteristik während des Betriebs des Elektromotors kann bei jeder Drehzahl ein optimierter Betrieb des Elektromotors gewährleistet werden, welcher eine hohe Motorleistung und eine geringe Verlustleistung sicherstellt. Die Schaltungsanordnung kann konkret zwischen wenigstens zwei Schaltzuständen umschaltbar sein, wobei der Elektromotor bei einer ersten Drehzahl des Elektromotors in einem ersten Schaltzustand eine höhere Motorleistung und/oder einen höheren Wirkungsgrad bereitstellt, als in dem zweiten Schaltzustand und wobei der Elektromotor bei einer von der ersten Drehzahl verschiedenen zweiten Drehzahl in dem zweiten Schaltzustand eine höhere Motorleistung und/oder einen höheren Wirkungsgrad bereitstellt, als in dem ersten Schaltzustand.

Gemäß einer vorteilhaften Ausführungsform ist die Gesamtzahl aller in einen Lastkreis eines Phasenleiters eingebundenen Windungen von Spulen durch Umschalten der Schaltungsanordnung veränderbar. Unterschiedliche Schaltzustände entsprechen somit unterschiedlichen Anzahlen von in einen bestimmten Lastkreis eingebundenen Spulenwindungen. Durch die Anzahl der Spulenwindungen lässt sich die Leistungscharakteristik des Elektromotors besonders wirksam beeinflussen und der Motorbetrieb besonders wirksam optimieren. Beispielsweise kann durch entsprechendes Umschalten bei niedrigeren Drehzahlen eine große Anzahl von Spulenwindungen eingestellt und dadurch eine hohe Motorleistung erreicht werden, ohne dass übermäßige Leistungsverluste auftreten, während bei höheren Drehzahlen eine geringere Anzahl von Spulenwindungen eingestellt werden kann, um eine hohe Motorleistung zu erreichen und gleichzeitig eine überhöhte Verlustleistung zu vermeiden. Durch entsprechendes Umschalten der Schaltungsanordnung während des Betriebs des Elektromotors wird folglich ein optimiertes Verhalten des Elektromotors unabhängig von dessen Drehzahl gewährleistet.

Durch das Umschalten der Schaltungsanordnung kann, z.B. durch eine wie vorstehend beschriebene Veränderung der Anzahl der in einen Lastkreis eines Phasenleiters eingebundenen Spulenwindungen, die durch alle in den Lastkreis eingebundenen Spulen gebildete Gesamtinduktivität des Lastkreises veränderbar sein.

Bevorzugt sind alle elektrischen Leiter während des Betriebs des Elektromotors mit einem elektrischen Versorgungspotential oder Versorgungsstrom zur Stromversorgung der Spulen beaufschlagbar. Die elektrischen Leiter können jeweils entweder mit einer Versorgungseinheit des Elektromotors verbunden sein, welche dazu ausgebildet ist, den jeweiligen Leiter mit dem Versorgungspotential oder Versorgungsstrom zu beaufschlagen, oder sie können über einen Anschluss des Elektromotors mit einer externen Stromversorgung verbindbar sein, welche den jeweiligen Leiter mit dem Versorgungspotential oder dem Versorgungsstrom beaufschlagt.

Die elektrischen Leiter können neben zumindest einem Phasenleiter auch einen elektrischen Neutralleiter umfassen. Vorzugsweise sind alle elektrischen Leiter jeweils als elektrischer Phasenleiter oder als elektrischer Neutralleiter ausgebildet. Unter einem elektrischen Phasenleiter wird ein Leiter verstanden, welcher mit einem zeitveränderlichen Versorgungspotential oder einem zeitveränderlichen Versorgungsstrom beaufschlagbar ist. Unter einem elektrischen Neutralleiter wird ein Leiter verstanden, welcher mit einem zeitlich im Wesentlichen konstanten und insbesondere neutralen Versorgungspotential beaufschlagbar ist.

Gemäß einer vorteilhaften Ausführungsform sind mehrere und insbesondere drei oder mehr als drei elektrische Phasenleiter vorgesehen, wobei in den verschiedenen Schaltzuständen vorzugsweise jeweils alle Phasenleiter stromversorgend mit den Spulen verbunden sind. Unterschiedliche Phasenleiter können mit Versorgungspotentialen bzw. -strömen beaufschlagbar sein, welche einen vorgegebenen Phasenunterschied aufweisen. Beispielsweise können drei elektrische Phasenleiter vorgesehen sein, deren Versorgungspotentiale bzw. -ströme zueinander um einen Winkel von jeweils 120° phasenverschoben sind und bevorzugt einen Drehstrom bilden.

Unter einem Lastkreis eines Phasenleiters wird ein Stromkreis verstanden, welcher den Phasenleiter elektrisch leitend unmittelbar mit einem weiteren elektrischen Leiter, d.h. insbesondere einem weiteren Phasenleiter oder Neutralleiter, oder mit einem Sternpunkt der die elektrischen Leiter und die Spulen umfassenden Schaltung verbindet. Unter einem Sternpunkt wird im Falle einer die elektrischen Leiter und die Spulen umfassenden Sternschaltung ein elektrischer Knoten verstanden, welcher die Lastkreise von mehreren, genauer gesagt von drei oder mehr, Phasenleitern sternförmig miteinander verbindet. Der Sternpunkt kann durch einen Neutralleiter oder einfach durch eine Verbindung der Lastkreise ohne einen Neutralleiter gebildet sein.

Darunter, dass eine Spule in den Lastkreis eines Phasenleiters eingebunden ist, wird verstanden, dass die Spule einen Teil des Lastkreises bildet und mit den elektrischen Leitern bzw. einem elektrischen Leiter und einem Sternpunkt, die über den Lastkreis miteinander verbunden sind, elektrisch leitfähig verbunden ist und von diesen Leitern bzw. dem Leiter und dem Sternpunkt mit Strom versorgbar ist.

Gemäß einer Ausführungsform ist wenigstens ein Paar von Spulen vorgesehen, wobei zumindest eine Spule eines oder jedes Spulenpaares in wenigstens zwei verschiedenen Schaltzuständen in einen Lastkreis eines Phasenleiters eingebunden ist. Bevorzugt ist zumindest einem Phasenleiter und insbesondere jedem Phasenleiter jeweils wenigstens ein Spulenpaar zugeordnet, insbesondere wobei zumindest eine Spule eines oder jedes Spulenpaares in beiden jeweiligen Schaltzuständen in einen Lastkreis des jeweils zugeordneten Phasenleiters eingebunden ist. Wie nachfolgend anhand mehrerer Beispiele erläutert ist, kann bei dieser Ausgestaltung durch Zu- und Abschalten oder unterschiedliches Verschalten der Spulen in den unterschiedlichen Schaltzuständen eine effektive Veränderung der Leistungscharakteristik des Elektromotors erreicht werden.

Die zumindest eine Spule eines oder jedes Spulenpaares kann in den beiden jeweiligen Schaltzuständen jeweils in denselben Lastkreis eingebunden sein. Bei dieser Ausgestaltung lassen sich durch das Umschalten der Schaltungsanordnung gezielt die Eigenschaften eines bestimmten, zwischen zwei elektrischen Leitern bzw. einem Leiter und einem Sternpunkt angeordneten Lastkreises beeinflussen.

Gemäß einer Ausführungsform sind in einem Schaltzustand beide Spulen eines Spulenpaares zusammen in einen Lastkreis eines Phasenleiters eingebunden und in einem anderen Schaltzustand ist eine der Spulen des Spulenpaares alleine in einen Lastkreis eines Phasenleiters eingebunden. Die andere Spule kann in dem anderen Schaltzustand abgeschaltet, das heißt nicht durch einen Phasenleiter bestromt bzw. bestrombar sein. Durch die Umschaltung zwischen dem Schaltzustand, in dem beide Spulen zusammen in einen Lastkreis eingebunden sind, und dem Schaltzustand, in dem eine Spule alleine in einen Lastkreis eingebunden ist, kann das Leistungsverhalten des Elektromotors wirksam beeinflusst werden. Beispielsweise können die beiden Spulen gemeinsam bei niedrigen Drehzahlen eine hohe Motorleistung bereitstellen, während bei hohen Drehzahlen eine Spule alleine aufgrund der geringeren Gegen-EMK eine hohe Motorleistung bei gleichzeitig geringen Leistungsverlusten gewährleistet.

In dem Schaltzustand, in dem beide Spulen zusammen in einen Lastkreis eingebunden sind, sind diese vorzugsweise in Reihenschaltung oder in Parallelschaltung zueinander geschaltet und in den Lastkreis eingebunden.

Gemäß einer weiteren Ausführungsform sind in einem Schaltzustand beide Spulen eines Spulenpaares in Serienschaltung in einen Lastkreis eines Phasenleiters eingebunden und in dem anderen Schaltzustand sind beide Spulen des Spulenpaares in Parallelschaltung in einen Lastkreis eines Phasenleiters eingebunden. Durch die Umschaltung zwischen der Serienschaltung und der Parallelschaltung der Spulen kann das Leistungsverhalten des Elektromotors ebenfalls wirksam angepasst werden.

Gemäß einer weiteren Ausführungsform ist in einem Schaltzustand eine der Spulen eines Spulenpaares alleine in einen Lastkreis eines Phasenleiters eingebunden und in dem anderen Schaltzustand ist die andere Spule des Spulenpaares alleine in denselben Lastkreis eingebunden. Durch Umschaltung zwischen den Schaltzuständen wird in dem Lastkreis somit zwischen den beiden Spulen des Paares umgeschaltet, wobei die jeweils nicht ausgewählte Spule ganz abgeschaltet werden kann, das heißt nicht von einem Phasenleiter bestromt oder bestrombar sein kann. Auch dadurch lässt sich das Leistungsverhalten des Motors wirksam beeinflussen.

Vorzugsweise sind alle Spulenpaare des Elektromotors gemäß einer der vorstehend beschriebenen Varianten umschaltbar, das heißt zwischen einem Schaltzustand, in dem die Spulen zusammen in einen Lastkreis eingebunden sind, einerseits und einem Schaltzustand, in dem eine Spulen alleine in einen Lastkreis eingebunden ist, andererseits oder zwischen einem Schaltzustand, in dem die Spulen in Parallelschaltung in einen Lastkreis eingebunden sind, einerseits und einem Schaltzustand, in dem beide Spulen in Serienschaltung in einen Lastkreis eingebunden sind, andererseits oder zwischen einem Schaltzustand, in dem eine der Spulen in einen Lastkreis eingebunden ist, einerseits und einem Schaltzustand, in dem die andere Spule in denselben Lastkreis eingebunden ist, andererseits.

Gemäß einer vorteilhaften Ausführungsform ist eine, insbesondere elektronische, Steuereinheit vorgesehen, die dazu eingerichtet ist, das Umschalten der Schaltungsanordnung während des Betriebs des Elektromotors zu steuern, insbesondere derart, dass der Schaltzustand der Schaltungsanordnung von der Drehzahl des Elektromotors abhängt.

Bevorzugt sind die Steuereinheit und die Schaltungsanordnung dazu eingerichtet, während des Betriebs des Elektromotors abhängig von der Drehzahl des Elektromotors zwischen wenigstens zwei verschiedenen Schaltzuständen der Schaltungsanordnung derart umzuschalten, dass in unterschiedlichen Drehzahlbereichen des Elektromotors jeweils derjenige Schaltzustand eingestellt ist, welcher bei der jeweiligen Drehzahl eine höhere Motorleistung und/oder einen höheren Wirkungsgrad gewährleistet als der andere Schaltzustand. Unter dem Wirkungsgrad wird das Verhältnis der Motorleistung, d.h. der von dem Motor zur Verfügung gestellten mechanischen Nutzleistung, zu der von dem Motor insgesamt aufgenommenen elektrischen Leistung verstanden.

Beispielsweise kann dazu bei einer geringeren Drehzahl ein Schaltzustand eingestellt sein, in dem die summierte Anzahl der Windungen aller in einen bestimmten Lastkreis eingebundenen Spulen größer ist, und bei einer höheren Drehzahl kann ein Schaltzustand eingestellt sein, in dem die summierte Anzahl der Windungen aller in den Lastkreis eingebundenen Spulen geringer ist.

Wie vorstehend beschrieben, kann der Elektromotor eine Stromversorgungseinheit zur Erzeugung der Versorgungspotentiale bzw. -ströme für die elektrischen Leiter umfassen. Die Stromversorgungseinheit kann halbleiterelektronisch ausgebildet sein. Die Stromversorgungseinheit selbst kann von einer externen Stromquelle mit einem Gleichstrom oder mit einem Wechselstrom versorgbar sein. Im Falle einer Wechselstromversorgung kann die Stromversorgungseinheit auch dazu ausgebildet sein, aus dem externen Wechselstrom zunächst einen internen Gleichstrom erzeugen. Die Stromversorgungseinheit kann dazu ausgebildet sein, aus einem externen oder internen Gleichstrom die bevorzugt zeitveränderlichen Versorgungspotentiale zu erzeugen. Die Stromversorgungseinheit kann dazu z.B. einen elektrischen oder elektronischen Wechselrichter umfassen. Dementsprechend kann es sich bei dem Elektromotor um einen Gleichstrommotor, d.h. um einen auf einem externen oder internen Gleichstrom basierenden Motor, handeln, insbesondere um einen bürstenlosen Gleichstrommotor.

Die Spulen des Elektromotors bilden vorzugsweise einen Teil des Stators des Motors und können von einem Kern des Motorstators getragen sein. Die Spulen können dabei auf den Kern aufgewickelt bzw. um den Kern herumgewickelt sein.

Der Kern kann zumindest bereichsweise und insbesondere vollständig aus einem magnetischen, insbesondere weichmagnetischen, und/oder metallischen Material bestehen. Der Kern ist vorzugsweise im Wesentlichen zylindermantelförmig ausgebildet und/oder weist eine durchgehende Öffnung zur Aufnahme des Läufers des Elektromotors auf. Der Kern kann auf seiner radialen Innenseite eine oder mehrere Nuten aufweisen, in denen die Spulen festgelegt sind. Der Kern kann mehrere, insbesondere in axialer Richtung, aufeinander gestapelte Scheiben umfassen, welche vorzugsweise zumindest bereichsweise und insbesondere vollständig aus einem magnetischen, insbesondere weichmagnetischen, und/oder metallischen Material bestehen, und welche vorzugsweise ein Blechpaket des Motorstators bilden.

Der Elektromotor kann zum Erreichen von Drehzahlen von wenigstens 1000 Hz oder mehr ausgebildet sein.

Der Läufer des Elektromotors ist vorzugsweise durch eine Rotorwelle der Vakuumpumpe gebildet, die Teil des Rotors bildet und an der eine oder mehrere pumpaktive Strukturen wie zum Beispiel eine oder mehrere turbomolekulare Rotorscheiben und/oder eine oder mehrere Holweckrotorhülsen des Rotors angeordnet sind. Die Rotorwelle trägt vorzugsweise eine Permanentmagnetanordnung zur antriebswirksamen magnetischen Kopplung mit dem durch die Spulen erzeugten Antriebsfeld.

Weiterer Gegenstand der Erfindung ist ein Verfahren zum Betreiben einer Vakuumpumpe entsprechend Anspruch 11.

Die elektrischen Leiter und die Spulen werden erfindungsgemäß zwischen einer Sterntopologie einerseits und einer Dreiecktopologie andererseits umgeschaltet. Durch das Ändern der Verschaltung der Spulen durch Umschalten der Schaltungsanordnung werden ein optimiertes Verhalten des Elektromotors und ein verbesserter Motorbetrieb erreicht.

Die in dieser Beschreibung in Bezug auf den Elektromotor und die Vakuumpumpe und deren Verwendung bzw. Betrieb beschriebenen Vorteile und vorteilhaften Ausführungsformen stellen entsprechende Vorteile und vorteilhafte Ausführungsformen des Verfahrens dar.

Bevorzugt wird der Schaltzustand der Schaltungsanordnung in Abhängigkeit von der Drehzahl des Elektromotors eingestellt. Gemäß einer vorteilhaften Ausführungsform wird während des Betriebs des Elektromotors abhängig von der Drehzahl des Elektromotors zwischen wenigstens zwei verschiedenen Schaltzuständen der Schaltungsanordnung derart umgeschaltet, dass in unterschiedlichen Drehzahlbereichen des Elektromotors jeweils derjenige Schaltzustand eingestellt ist, welcher bei der jeweiligen Drehzahl eine höhere Motorleistung und/oder einen höheren Wirkungsgrad gewährleistet als der andere Schaltzustand.

Figuren:
- Fig. 1a, b: ein Schaltbild eines Elektromotors in einem ersten Schaltzustand (Fig. 1a) und in einem zweiten Schaltzustand (Fig. 1b),
- Fig. 2: ein Schaltbild eines Elektromotors,
- Fig. 3a, b: ein Schaltbild eines Elektromotors in einem ersten Schaltzustand (Fig. 3a) und in einem zweiten Schaltzustand (Fig. 3b) und
- Fig. 4: eine Vakuumpumpe im Querschnitt.

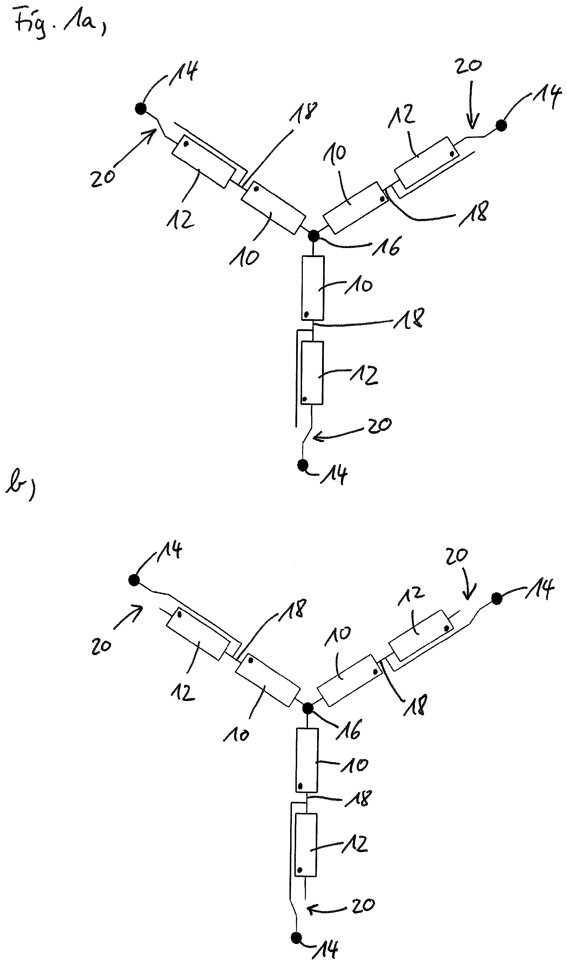

Der in Fig. 1a, b gezeigte Elektromotor umfasst drei elektrische Phasenleiter 14 und einen Neutralleiter 16. Jedem Phasenleiter 14 ist ein Paar von Spulen 10, 12 zugeordnet, die über eine Schaltungsanordnung in den Lastkreis 18 des jeweiligen Phasenleiters 14 eingebunden bzw. einbindbar sind. Die Spulen 10, 12 dienen zur Erzeugung eines magnetischen Antriebsfelds und sind mit den Phasenleitern 14 in einer Sternschaltung verschaltet, wobei im vorliegenden Ausführungsbeispiel der Neutralleiter 16 den Sternpunkt der Sternschaltung bildet. Der Sternpunkt 16 könnte aber prinzipiell auch einfach ohne einen Neutralleiter durch einen die Lastkreise 18 der Phasenleiter 14 verbindenden elektrischen Knoten gebildet sein.

Die die Phasenleiter 14 und die Spulen 10, 12 verbindende Schaltungsanordnung umfasst mehrere elektrische Schalter 20 zum Umschalten zwischen den verschiedenen Schaltzuständen. In dem in Fig. 1a gezeigten Schaltzustand der Schaltungsanordnung sind jeweils beide Spulen 10, 12 jedes Spulenpaares in den Lastkreis 18 des zugehörigen Phasenleiters 14 eingebunden und in dem jeweiligen Lastkreis 18 zueinander in Serie geschaltet.

In dem in Fig. 1b gezeigten Schaltzustand ist hingegen jeweils nur eine Spule 10 jedes Spulenpaares in den Lastkreis 18 des zugehörigen Phasenleiters 14 eingebunden, während die andere Spule 12 jeweils abgeschaltet und nicht mit Strom versorgbar ist. In dem in Fig. 1b gezeigten Schaltzustand sind folglich lediglich die Windungen der Spule 10 in den jeweiligen Lastkreis 18 eingebunden, während in dem in Fig. 1a gezeigten Schaltzustand die Windungen beider Spulen 10, 12 in den jeweiligen Lastkreis 18 eingebunden sind.

Der Elektromotor umfasst eine in Fig. 1a, b nicht dargestellte Steuereinheit zum Umschalten zwischen den in Fig. 1a und Fig. 1b gezeigten Schaltzuständen. Dabei wird der in Fig. 1a gezeigte Schaltzustand mit der größeren Anzahl von in den Lastkreisen 18 angeordneten Windungen in einem niedrigen Drehzahlbereich eingestellt, um in diesem Drehzahlbereich eine hohe Motorleistung bereitzustellen. In einem hohen Drehzahlbereich wird der in Fig. 1b gezeigte Schaltzustand eingestellt, so dass infolge der geringen Windungsanzahl eine geringe Gegen-EMK und folglich eine geringe Verlustleistung bei hoher Motorleistung erreicht wird. Prinzipiell kann die Schaltungsanordnung auch zwischen mehr als den zwei in Fig. 1a und Fig. 1b gezeigten Schaltzuständen umschaltbar sein.

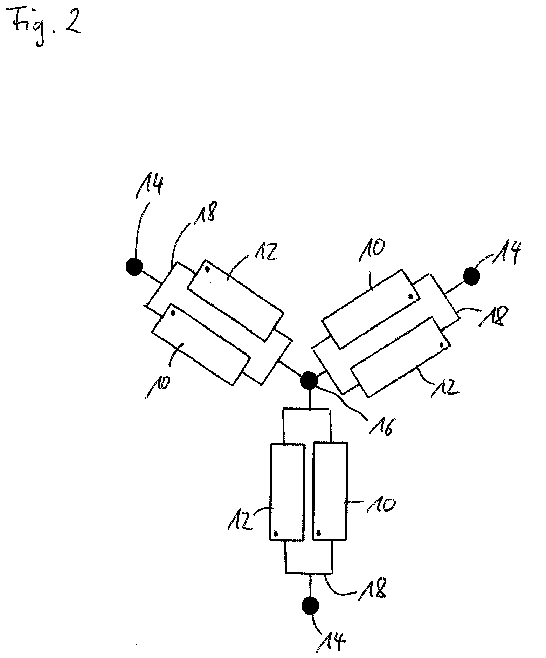

Fig. 2 zeigt eine alternative Ausführungsform eines Elektromotors, welche abgesehen von den nachstehend beschriebenen Unterschieden der in Fig. 1 beschriebenen Ausführungsform entspricht.

Bei dem in Fig. 2 gezeigten Elektromotor sind die beiden Spulen 10, 12 in dem in Fig. 2 dargestellten Schaltzustand nicht seriell, sondern parallel zueinander geschaltet und in einen jeweiligen Lastkreis 18 eingebunden. Dieser Schaltzustand wird vorzugsweise in einem niedrigen Drehzahlbereich eingestellt.

In einem anderen Schaltzustand, welcher in Fig. 2 nicht dargestellt ist, und welcher vorzugsweise in einem hohen Drehzahlbereich eingestellt wird, ist lediglich die Spule 10 jedes Paares in den jeweiligen Lastkreis 18 eingebunden, während die Spule 12 jeweils nicht in einen Lastkreis 18 eingebunden ist, sondern abgeschaltet und nicht mit Strom versorgbar ist. Folglich liegt in dem in Fig. 2 gezeigten Schaltzustand eine höhere Anzahl von in den Lastkreisen 18 eingebundenen Spulenwindungen vor als in dem anderen Schaltzustand. Die Umschaltung zwischen den beiden Schaltzuständen kann durch elektrische Schalter bewerkstelligt werden, welche in Fig. 2 nicht dargestellt sind.

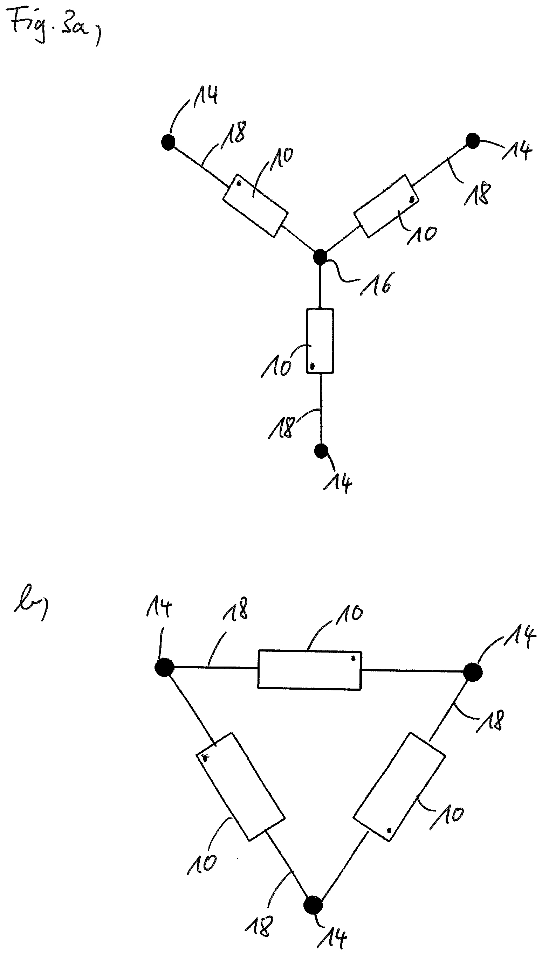

Der in Fig. 3a, b gezeigte Elektromotor weist eine Schaltungsanordnung auf, welche zwischen dem in Fig. 3a gezeigten Schaltzustand und dem in Fig. 3b gezeigten Schaltzustand umschaltbar ist. Diese Umschaltbarkeit kann durch Schalter gewährleistet werden, die in Fig. 3a, b nicht dargestellt sind. Der Elektromotor umfasst drei Spulen 10, die in den unterschiedlichen Schaltzuständen der Schaltungsanordnung jeweils in einen Lastkreis 18 eines Phasenleiters 14 eingebunden sind.

In dem in Fig. 3a gezeigten Schaltzustand sind die Phasenleiter 14 in einer Sternschaltung mit den Spulen 10 verschaltet und in dem in Fig. 3b gezeigten Schaltzustand sind die Phasenleiter 14 in einer Dreiecksschaltung mit den Spulen 10 verschaltet. Der in Fig. 3a gezeigte Schaltzustand wird vorzugsweise in einem niedrigen Drehzahlbereich und der in Fig. 3b gezeigte Schalzustand in einem hohen Drehzahlbereich eingestellt.

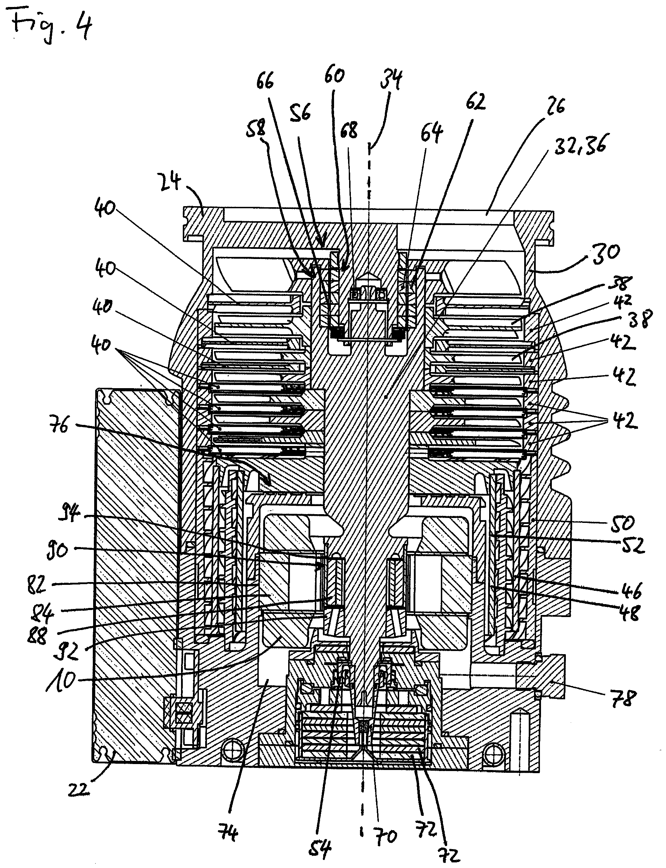

Die in Fig. 4 gezeigte Vakuumpumpe umfasst einen von einem Einlassflansch 24 umgebenen Pumpeneinlass 26 sowie mehrere Pumpstufen zur Förderung des an dem Pumpeneinlass 26 anstehenden Gases zu einem in Fig. 4 nicht dargestellten Pumpenauslass. Die Vakuumpumpe umfasst ein Gehäuse 30 und einen in dem Gehäuse 30 angeordneten Rotor 32 mit einer um eine Rotationsachse 34 drehbar gelagerten Rotorwelle 36.

Die Pumpe ist als Turbomolekularpumpe ausgebildet und umfasst mehrere pumpwirksam miteinander in Serie geschaltete turbomolekulare Pumpstufen mit mehreren an der Rotorwelle 36 befestigten turbomolekularen Rotorscheiben 38 und in axialer Richtung zwischen den Rotorscheiben 38 angeordneten und in dem Gehäuse 30 festgelegten Statorscheiben 40. Die Statorscheiben 40 sind durch Abstandsringe 42 in einem gewünschten axialen Abstand zueinander gehalten.

Die Vakuumpumpe umfasst außerdem drei in radialer Richtung ineinander angeordnete und pumpwirksam miteinander in Serie geschaltete Holweckpumpstufen. Der rotorseitige Teil der Holweckpumpstufen umfasst eine mit der Rotorwelle 36 verbundene Rotornabe 44 und zwei an der Rotornabe 44 befestigte und von dieser getragene zylindermantelförmige Holweckrotorhülsen 46, 48, die koaxial zu der Rotationsachse 34 orientiert und in radialer Richtung ineinander geschachtelt sind. Ferner sind zwei zylindermantelförmige Holweckstatorhülsen 50, 52 vorgesehen, die ebenfalls koaxial zu der Rotationsachse 34 orientiert und in radialer Richtung ineinander geschachtelt sind. Die pumpaktiven Oberflächen der Holweckpumpstufen sind jeweils durch die einander unter Ausbildung eines engen radialen Holweckspalts gegenüberliegenden radialen Mantelflächen jeweils einer Holweckrotorhülse 46, 48 und einer Holweckstatorhülse 50, 52 gebildet. Dabei ist jeweils eine der pumpaktiven Oberflächen glatt ausgebildet - vorliegend diejenige der Holweckrotorhülse 46 bzw. 48 - und die gegenüberliegende pumpaktive Oberfläche der Holweckstatorhülse 50, 52 weist eine Strukturierung mit schraubenlinienförmig um die Rotationsachse 34 herum in axialer Richtung verlaufenden Nuten auf, in denen bei der Rotation des Rotors 32 das Gas vorangetrieben und dadurch gepumpt wird.

Die drehbare Lagerung der Rotorwelle 36 wird durch ein Wälzlager 54 im Bereich des Pumpenauslasses und ein Permanentmagnetlager 56 im Bereich des Pumpeneinlasses 26 bewirkt.

Das Permanentmagnetlager 56 umfasst eine rotorseitige Lagerhälfte 58 und eine statorseitige Lagerhälfte 60, welche jeweils einen Ringstapel aus mehreren in axialer Richtung aufeinander gestapelten permanentmagnetischen Ringen 62, 64 umfassen, wobei sich die Magnetringe 62, 64 unter Ausbildung eines radialen Lagerspalts 66 gegenüberliegen.

Innerhalb des Magnetlagers 56 ist ein Not- bzw. Fanglager 68 vorgesehen, welches als ungeschmiertes Wälzlager ausgebildet ist und im normalen Betrieb der Vakuumpumpe ohne Berührung leer läuft und erst bei einer übermäßigen radialen Auslenkung des Rotors 32 gegenüber dem Stator in Eingriff gelangt, um einen radialen Anschlag für den Rotor 32 zu bilden, der eine Kollision der rotorseitigen Strukturen mit den statorseitigen Strukturen verhindert.

Im Bereich des Wälzlagers 54 ist an der Rotorwelle 36 eine konische Spritzmutter 70 mit einem zu dem Wälzlager 54 hin zunehmenden Außendurchmesser vorgesehen. Die Spritzmutter 70 steht mit zumindest einem Abstreifer eines mehrere aufeinander gestapelte saugfähige Scheiben 72 umfassenden Betriebsmittelspeichers in gleitendem Kontakt, welche mit einem Betriebsmittel wie z.B. einem Schmiermittel für das Wälzlager 54 getränkt sind. Im Betrieb der Vakuumpumpe wird das Betriebsmittel durch kapillare Wirkung von dem Betriebsmittelspeicher über den Abstreifer auf die rotierende Spritzmutter 70 übertragen und infolge der Zentrifugalkraft entlang der Spritzmutter 70 in Richtung des größer werdenden Außendurchmessers der Spritzmutter 70 zu dem Wälzlager 54 hin gefördert, wo es zum Beispiel eine schmierende Funktion erfüllt.

Die Vakuumpumpe umfasst einen Motorraum 74, in den sich die Rotorwelle 36 hinein erstreckt. Der Motorraum 74 ist im Bereich des Eintritts der Rotorwelle 36 durch eine Labyrinthdichtung 76 gegenüber dem Arbeits- bzw. Schöpfraum der Vakuumpumpe abgedichtet. Ein Sperrgaseinlass 78 ermöglicht den Einlass eines Sperrgases in den Motorraum 74.

In dem Motorraum 74 ist der Antriebsmotor der Vakuumpumpe angeordnet, welcher zum Beispiel gemäß einer der vorstehend in Bezug auf Fig. 1-3 beschriebenen Ausführungsformen ausgestaltet sein kann.

Der Antriebsmotor dient zum drehenden Antreiben des Rotors 32 und umfasst einen Motorstator 82 mit einem Kern 84 und mit mehreren in Fig. 4 nur schematisch dargestellten Spulen 10, die in an der radialen Innenseite des Kerns 84 vorgesehenen Nuten des Kerns 84 festgelegt sind. Der Kern 84 besteht aus einem Blechpaket mit mehreren in axialer Richtung aufeinander gestapelten Blechscheiben aus einem weichmagnetischen Material.

Der Läufer des Antriebsmotors, welcher auch als Anker bezeichnet wird, ist durch die Rotorwelle 36 gebildet, die sich durch den Motorstator 82 hindurch erstreckt. Auf dem sich durch den Motorstator 82 hindurch erstreckenden Abschnitt der Rotorwelle 36 ist radial außenseitig eine Permanentmagnetanordnung 88 festgelegt. Zwischen dem Motorstator 82 und dem sich durch den Motorstator 82 hindurch erstreckenden Abschnitt der Rotorwelle 36 ist ein radialer Motorspalt 90 ausgebildet, über den sich der Motorstator 82 und die Permanentmagnetanordnung 88 zur Übertragung des Antriebsmoments magnetisch beeinflussen.

Die Permanentmagnetanordnung 88 ist in axialer Richtung durch eine auf die Rotorwelle 36 aufgesteckte Befestigungshülse 92 an der Rotorwelle 36 fixiert. Eine Kapselung 94 umgibt die Permanentmagnetanordnung 88 an deren radialer Außenseite und dichtet diese gegenüber dem Motorspalt 90 ab.

Eine Steuer- und Stromversorgungseinheit 22 ist dazu eingerichtet, die in Fig. 4 nicht dargestellten Phasenleiter des Antriebsmotors während des Betriebs der Vakuumpumpe mit zeitveränderlichen elektrischen Versorgungspotentialen zu beaufschlagen und um die in Fig. 4 ebenfalls nicht dargestellte Schaltungsanordnung derart zu steuern und umzuschalten, dass ein optimierter Motorbetrieb erreicht wird.

### Bezugszeichenliste

- 10, 12: Spule
- 14: Phasenleiter
- 16: Neutralleiter, Sternpunkt
- 18: Lastkreis
- 20: Schalter
- 22: Steuereinheit
- 24: Einlassflansch
- 26: Pumpeneinlass
- 30: Gehäuse
- 32: Rotor
- 34: Rotationsachse
- 36: Rotorwelle
- 38: Rotorscheibe
- 40: Statorscheibe
- 42: Abstandsring
- 44: Rotornabe
- 46, 48: Holweckrotorhülse
- 50, 52: Holweckstatorhülse
- 54: Wälzlager
- 56: Permanentmagnetlager
- 58, 60: Lagerhälfte
- 62, 64: Magnetring
- 66: Lagerspalt
- 68: Fanglager
- 70: Spritzmutter
- 72: Saugfähige Scheibe
- 74: Motorraum
- 76: Labyrinthdichtung
- 78: Sperrgaseinlass
- 82: Motorstator
- 84: Kern
- 88: Permanentmagnetanordnung
- 90: Motorspalt
- 92: Befestigungshülse
- 94: Kapselung

## Patentansprüche

1. Vakuumpumpe mit einem Rotor (32), der eine Rotorwelle (36) aufweist, einem Motorraum (74), in den sich die Rotorwelle (36) hinein erstreckt, und einem Elektromotor, der in dem Motorraum (74) angeordnet ist, zum drehenden Antreiben des Rotors (32),
wobei ein Läufer des Elektromotors durch die Rotorwelle (36) gebildet ist und der Elektromotor mehrere Spulen (10, 12) zur Erzeugung eines magnetischen Antriebsfelds, mehrere elektrische Leiter (14, 16), welche wenigstens einen elektrischen Phasenleiter (14) umfassen, zur Stromversorgung der Spulen (10, 12) und eine Schaltungsanordnung zur Verbindung der Spulen (10, 12) mit den elektrischen Leitern (14, 16) aufweist,
**dadurch gekennzeichnet, dass**
die Spulen (10, 12) eines Spulenpaares koaxial zueinander und i) in axialer Richtung zumindest teilweise überlappend nebeneinander oder ineinander oder ii) in axialer Richtung unmittelbar aufeinander folgend angeordnet sind,
wobei die Schaltungsanordnung zwischen unterschiedlichen Schaltzuständen umschaltbar ist, in denen die elektrischen Leiter (14, 16) jeweils stromversorgend mit den Spulen (10, 12) verbunden sind, wobei die elektrischen Leiter (14, 16) und die Spulen (10, 12) in den unterschiedlichen Schaltzuständen unterschiedlich miteinander verschaltet sind, und
wobei die elektrischen Leiter (14, 16) und die Spulen (10, 12) zwischen einem Schaltzustand mit Sterntopologie und einem Schaltzustand mit Dreiecktopologie umschaltbar sind.

2. Vakuumpumpe nach Anspruch 1,
**dadurch gekennzeichnet, dass**
die Schaltungsanordnung zwischen wenigstens zwei Schaltzuständen umschaltbar ist, um dadurch die Leistungscharakteristik des Elektromotors zu verändern, wobei der Elektromotor bei einer ersten Drehzahl des Elektromotors in einem ersten Schaltzustand eine höhere Motorleistung und/oder einen höheren Wirkungsgrad bereitstellt als in einem zweiten Schaltzustand und wobei der Elektromotor bei einer von der ersten Drehzahl verschiedenen zweiten Drehzahl in dem zweiten Schaltzustand eine höhere Motorleistung und/oder einen höheren Wirkungsgrad bereitstellt als in dem ersten Schaltzustand.

3. Vakuumpumpe nach Anspruch 1 oder 2,
**dadurch gekennzeichnet, dass**
die Gesamtzahl aller in einen Lastkreis (18) eines Phasenleiters (14) eingebundenen Windungen von Spulen (10, 12) durch Umschalten der Schaltungsanordnung veränderbar ist, indem zumindest eine der Spulen (10, 12) in einen Lastkreis (18) des Phasenleiters (14) eingebunden oder abgeschaltet ist oder die mehreren Spulen (10, 12) in unterschiedlichen Schaltzuständen der Schaltungsanordnung jeweils in einen Lastkreis (18) des Phasenleiters (14) eingebunden sind.

4. Vakuumpumpe nach einem der vorstehenden Ansprüche,
**dadurch gekennzeichnet, dass**
mehrere und insbesondere drei oder mehr als drei elektrische Phasenleiter (14) vorgesehen sind, wobei in den verschiedenen Schaltzuständen jeweils alle Phasenleiter (14) stromversorgend mit den Spulen (10, 12) verbunden sind.

5. Vakuumpumpe nach einem der vorstehenden Ansprüche,
**dadurch gekennzeichnet, dass**
wenigstens ein Paar von Spulen (10, 12) vorgesehen ist, wobei zumindest eine Spule (10, 12) eines oder jedes Spulenpaares in wenigstens zwei verschiedenen Schaltzuständen in einen Lastkreis (18) eines Phasenleiters (14) eingebunden ist.

6. Vakuumpumpe nach Anspruch 5,
**dadurch gekennzeichnet, dass**
in einem Schaltzustand beide Spulen (10, 12) eines Spulenpaares zusammen in einen Lastkreis (18) eines Phasenleiters (14) eingebunden sind und in einem anderen Schaltzustand eine der Spulen (10, 12) des Spulenpaares alleine in einen Lastkreis (18) eines Phasenleiters (14) eingebunden ist.

7. Vakuumpumpe nach Anspruch 5 oder 6,
**dadurch gekennzeichnet, dass**
in einem Schaltzustand beide Spulen (10, 12) eines Spulenpaares in Serienschaltung in einen Lastkreis (18) eines Phasenleiters (14) eingebunden sind und in dem anderen Schaltzustand beide Spulen (10, 12) des Spulenpaares in Parallelschaltung in einen Lastkreis (18) eines Phasenleiters (14) eingebunden sind.

8. Vakuumpumpe nach einem der Ansprüche 5 bis 7,
**dadurch gekennzeichnet, dass**
in einem Schaltzustand eine der Spulen (10, 12) eines Spulenpaares alleine in einen Lastkreis (18) eines Phasenleiters (14) eingebunden ist und in dem anderen Schaltzustand die andere Spule (10, 12) des Spulenpaares alleine in denselben Lastkreis (18) eingebunden ist.

9. Vakuumpumpe nach einem der vorstehenden Ansprüche,
**dadurch gekennzeichnet, dass**
eine Steuereinheit (22) vorgesehen ist, die dazu eingerichtet ist, das Umschalten der Schaltungsanordnung während des Betriebs des Elektromotors zu steuern, insbesondere derart, dass der Schaltzustand der Schaltungsanordnung von der Drehzahl des Elektromotors abhängt.

10. Vakuumpumpe nach Anspruch 9,
**dadurch gekennzeichnet, dass**
die Steuereinheit (22) und die Schaltungsanordnung dazu eingerichtet sind, während des Betriebs des Elektromotors abhängig von der Drehzahl des Elektromotors zwischen wenigstens zwei verschiedenen Schaltzuständen der Schaltungsanordnung derart umzuschalten, dass der Elektromotor bei einer ersten Drehzahl in einem ersten Schaltzustand eine höhere Motorleistung und/oder einen höheren Wirkungsgrad bereitstellt als in einem zweiten Schaltzustand und bei einer von der ersten Drehzahl verschiedenen zweiten Drehzahl in dem zweiten Schaltzustand eine höhere Motorleistung und/oder einen höheren Wirkungsgrad bereitstellt als in dem ersten Schaltzustand.

11. Verfahren zum Betreiben einer Vakuumpumpe mit einem Rotor (32), der eine Rotorwelle (36) aufweist, einem Motorraum (74), in den sich die Rotorwelle (36) hinein erstreckt, und einem Elektromotor, der in dem Motorraum (74) angeordnet ist, zum drehenden Antreiben des Rotors (32), wobei ein Läufer des Elektromotors durch die Rotorwelle (36) gebildet ist und der Elektromotor mehrere Spulen (10, 12) zur Erzeugung eines magnetischen Antriebsfelds, mehrere elektrische Leiter (14, 16), welche wenigstens einen elektrischen Phasenleiter (14) umfassen, zur Stromversorgung der Spulen (10, 12) und eine Schaltungsanordnung zur Verbindung der Spulen (10, 12) mit den elektrischen Leitern (14, 16) aufweist,
**dadurch gekennzeichnet, dass**
die Spulen (10, 12) eines Spulenpaares koaxial zueinander und i) in axialer Richtung zumindest teilweise überlappend nebeneinander oder ineinander oder ii) in axialer Richtung unmittelbar aufeinander folgend angeordnet sind,
wobei die Schaltungsanordnung während des Betriebs des Elektromotors zwischen unterschiedlichen Schaltzuständen umgeschaltet wird, in denen die elektrischen Leiter (14, 16) jeweils stromversorgend mit den Spulen (10, 12) verbunden sind, wobei die elektrischen Leiter (14, 16) und die Spulen (10, 12) in den unterschiedlichen Schaltzuständen unterschiedlich miteinander verschaltet sind,
wobei die elektrischen Leiter (14, 16) und die Spulen (10, 12) zwischen einem Schaltzustand mit Sterntopologie und einem Schaltzustand mit Dreiecktopologie umgeschaltet wird.

12. Verfahren nach Anspruch 11,
**dadurch gekennzeichnet, dass**
der Schaltzustand der Schaltungsanordnung in Abhängigkeit von der Drehzahl des Elektromotors eingestellt wird.

13. Verfahren nach Anspruch 11 oder 12,
**dadurch gekennzeichnet, dass**
abhängig von der Drehzahl des Elektromotors zwischen wenigstens zwei verschiedenen Schaltzuständen der Schaltungsanordnung derart umgeschaltet wird, dass in unterschiedlichen Drehzahlbereichen des Elektromotors jeweils derjenige Schaltzustand eingestellt ist, welcher bei der jeweiligen Drehzahl eine höhere Motorleistung und/oder einen höheren Wirkungsgrad gewährleistet als der andere Schaltzustand.

## Claims

1. A vacuum pump comprising a rotor (32) which has a rotor shaft (36); a motor space (74) into which the rotor shaft (36) extends; and an electric motor arranged in the motor space (74) for driving the rotor (32) in a rotating manner,
wherein a rotor of the electric motor is formed by the rotor shaft (36) and the electric motor has a plurality of coils (10, 12) for generating a magnetic drive field, a plurality of electrical conductors (14, 16) which comprise at least one electrical phase conductor (14) for supplying power to the coils (10, 12), and a circuit arrangement for connecting the coils (10, 12) to the electrical conductors (14, 16),
**characterized in that**
the coils (10, 12) of a coil pair are arranged coaxially to one another and are arranged i) next to one another or in one another at least partly overlapping in an axial direction or ii) directly following one another in the axial direction,
with the circuit arrangement being switchable between different switching states in which the electrical conductors (14, 16) are each connected to the coils (10, 12) in a power-supplying manner, with the electrical conductors (14, 16) and the coils (10, 12) being differently connected to one another in the different switching states, and
with the electrical conductors (14, 16) and the coils (10, 12) being switchable between a switching state having a star topology and a switching state having a triangular topology.

2. A vacuum pump in accordance with claim 1,
**characterized in that**
the circuit arrangement can be switched between at least two switching states in order thereby to vary the power characteristic of the electric motor, with the electric motor providing a higher motor power and/or a higher efficiency at a first rotational speed of the electric motor in a first switching state than in a second switching state, and with the electric motor providing a higher motor power and/or a higher efficiency at a second rotational speed different from the first rotational speed in the second switching state than in the first switching state.

3. A vacuum pump in accordance with claim 1 or claim 2,
**characterized in that**
the total number of all the windings of coils (10, 12) integrated into a load circuit (18) of a phase conductor (14) is variable by a switching over of the circuit arrangement **in that** at least one of the coils (10, 12) is incorporated into a load circuit (18) of the phase conductor (14) or is switched off or the plurality of coils (10, 12) are each incorporated into a load circuit (18) of the phase conductor (14) in different switching states of the circuit arrangement.

4. A vacuum pump in accordance with any one of the preceding claims,
**characterized in that**
a plurality of electrical phase conductors (14), and in particular three or more than three electrical phase conductors (14), are provided, with in each case all of the phase conductors (14) being connected to the coils (10, 12) in a power-supplying manner in the different switching states.

5. A vacuum pump in accordance with any one of the preceding claims,
**characterized in that**
at least one pair of coils (10, 12) is provided, with at least one coil (10, 12) of one or each coil pair being incorporated into a load circuit (18) of a phase conductor (14) in at least two different switching states.

6. A vacuum pump in accordance with claim 5,
**characterized in that**
both coils (10, 12) of a coil pair are incorporated together into a load circuit (18) of a phase conductor (14) in one switching state and one of the coils (10, 12) of the coil pair is incorporated on its own into a load circuit (18) of a phase conductor (14) in another switching state.

7. A vacuum pump in accordance with claim 5 or claim 6,
**characterized in that**
both coils (10, 12) of a coil pair are incorporated in serial connection into a load circuit (18) of a phase conductor (14) in one switching state and both coils (10, 12) of the coil pair are incorporated in parallel connection into a load circuit (18) of a phase conductor (14) in the other switching state.

8. A vacuum pump in accordance with any one of the claims 5 to 7,
**characterized in that**
one of the coils (10, 12) of a coil pair is incorporated on its own into a load circuit (18) of a phase conductor (14) in one switching state and the other coil (10, 12) of the coil pair is incorporated on its own into the same load circuit (18) in the other switching state.

9. A vacuum pump in accordance with any one of the preceding claims,
**characterized in that**
a control unit (22) is provided which is configured to control the switching over of the circuit arrangement during the operation of the electric motor, in particular such that the switching state of the circuit arrangement is dependent on the rotational speed of the electric motor.

10. A vacuum pump in accordance with claim 9,
**characterized in that**
the control unit (22) and the circuit arrangement are configured to switch between at least two different switching states of the circuit arrangement during the operation of the electric motor in dependence on the rotational speed of the electric motor such that the electric motor provides a higher motor power and/or a higher efficiency at a first rotational speed in a first switching state than in a second switching state and provides a higher motor power and/or a higher efficiency at a second rotational speed different from the first rotational speed in a second switching state than in the first switching state.

11. A method of operating a vacuum pump comprising a rotor (32) which has a rotor shaft (36); a motor space (74) into which the rotor shaft (36) extends; and an electric motor arranged in the motor space (74) for driving the rotor (32) in a rotating manner,
wherein a rotor of the electric motor is formed by the rotor shaft (36) and the electric motor has a plurality of coils (10, 12) for generating a magnetic drive field, a plurality of electrical conductors (14, 16) which comprise at least one electrical phase conductor (14) for supplying power to the coils (10, 12), and a circuit arrangement for connecting the coils (10, 12) to the electrical conductors (14, 16),
**characterized in that**
the coils (10, 12) of a coil pair are arranged coaxially to one another and are arranged i) next to one another or in one another at least partly overlapping in an axial direction or ii) directly following one another in the axial direction,
with the circuit arrangement being switched during the operation of the electric motor between different switching states in which the electrical conductors (14, 16) are each connected to the coils (10, 12) in a power-supplying manner, with the electrical conductors (14, 16) and the coils (10, 12) being differently connected to one another in the different switching states, and
with the electrical conductors (14, 16) and the coils (10, 12) being switched between a switching state having a star topology and a switching state having a triangular topology.

12. A method in accordance with claim 11,
**characterized in that**
the switching state of the circuit arrangement is set in dependence on the rotational speed of the electric motor.

13. A method in accordance with claim 11 or claim 12,
**characterized in that**
a switch is made between at least two different switching states of the circuit arrangement in dependence on the rotational speed of the electric motor such that, in different rotational speed ranges of the electric motor, that respective switching state is set which ensures a higher motor power and/or a higher efficiency at the respective rotational speed than the other switching state.

## Revendications

1. Pompe à vide comportant un rotor (32) pourvu d'un arbre de rotor (36), un compartiment moteur (74) jusqu'à l'intérieur duquel s'étend l'arbre de rotor (36), et un moteur électrique qui est agencé dans le compartiment moteur (74) et qui est destiné à l'entraînement en rotation du rotor (32),
un rotor du moteur électrique étant formé par l'arbre de rotor (36) et le moteur électrique comprenant plusieurs bobines (10, 12) pour générer un champ magnétique d'entraînement, plusieurs conducteurs électriques (14, 16) qui comprennent au moins un conducteur électrique de phase (14), pour alimenter en courant les bobines (10, 12), et un ensemble de commutation pour connecter les bobines (10, 12) aux conducteurs électriques (14, 16),
**caractérisée en ce que**
les bobines (10, 12) d'une paire de bobines sont agencées coaxialement l'une par rapport à l'autre et i) l'une à côté ou dans l'autre de manière à se chevaucher au moins partiellement en direction axiale ou ii) l'une directement à la suite de l'autre en direction axiale,
l'ensemble de commutation pouvant être commuté entre différents états de commutation dans lesquels les conducteurs électriques (14, 16) sont chacun connectés aux bobines (10, 12) en assurant l'alimentation en courant, les conducteurs électriques (14, 16) et les bobines (10, 12) étant interconnectés différemment dans les différents états de commutation, et
les conducteurs électriques (14, 16) et les bobines sont commutables entre un état de commutation à topologie en étoile et un état de commutation à topologie triangulaire.

2. Pompe à vide selon la revendication 1,
**caractérisée en ce que**
l'ensemble de commutation est commutable entre au moins deux états de commutation pour ainsi modifier la caractéristique de puissance du moteur électrique, et lors d'un premier régime de rotation du moteur électrique, le moteur électrique fournit dans un premier état de commutation une puissance de moteur plus élevée et/ou un rendement plus élevé que dans un second état de commutation, et lors d'un second régime de rotation différent du premier régime de rotation, le moteur électrique fournit dans le second état de commutation une puissance de moteur plus élevée et/ou un rendement plus élevé que dans le premier état de commutation.

3. Pompe à vide selon la revendication 1 ou 2,
**caractérisée en ce que**
le nombre total de toutes les spires de bobines (10, 12) intégrées dans un circuit de charge (18) d'un conducteur de phase (14) est variable par commutation de l'ensemble de commutation du fait que l'une au moins des bobines (10, 12) est intégrée dans un circuit de charge (18) du conducteur de phase (14) ou bien est déconnectée, ou du fait que lesdites plusieurs bobines (10, 12) sont chacune intégrées dans un circuit de charge (18) du conducteur de phase (14) dans différents états de commutation de l'ensemble de commutation.

4. Pompe à vide selon l'une des revendications précédentes,
**caractérisée en ce que**
il est prévu plusieurs et en particulier trois ou plus de trois conducteurs électriques de phase (14), et dans les différents états de commutation respectivement tous les conducteurs de phase (14) sont connectés aux bobines (10, 12) en assurant l'alimentation en courant.

5. Pompe à vide selon l'une des revendications précédentes, **caractérisée en ce que**
il est prévu au moins une paire de bobines (10, 12), au moins une bobine (10, 12) d'une ou de chaque paire de bobines étant intégrée dans un circuit de charge (18) d'un conducteur de phase (14) dans au moins deux états de commutation différents.

6. Pompe à vide selon la revendication 5,
**caractérisée en ce que**
dans un état de commutation, les deux bobines (10, 12) d'une paire de bobines sont intégrées conjointement dans un circuit de charge (18) d'un conducteur de phase (14), et dans un autre état de commutation, l'une des bobines (10, 12) de la paire de bobines est intégrée à elle-seule dans un circuit de charge (18) d'un conducteur de phase (14).

7. Pompe à vide selon la revendication 5 ou 6,
**caractérisée en ce que**
dans un état de commutation, les deux bobines (10, 12) d'une paire de bobines sont intégrées en série dans un circuit de charge (18) d'un conducteur de phase (14), et dans un autre état de commutation, les deux bobines (10, 12) de la paire de bobines sont intégrées en parallèle dans un circuit de charge (18) d'un conducteur de phase (14).

8. Pompe à vide selon l'une des revendications 5 à 7,
**caractérisée en ce que**
dans un état de commutation, l'une des bobines (10, 12) d'une paire de bobines est intégrée à elle-seule dans un circuit de charge (18) d'un conducteur de phase (14), et dans l'autre état de commutation, l'autre bobine (10, 12) de la paire de bobines est intégrée à elle-seule dans le même circuit de charge (18).

9. Pompe à vide selon l'une des revendications précédentes,
**caractérisée en ce que**
il est prévu une unité de commande (22) qui est conçue pour commander la commutation de l'ensemble de commutation pendant le fonctionnement du moteur électrique, en particulier de telle sorte que l'état de commutation de l'ensemble de commutation dépend du régime de rotation du moteur électrique.

10. Pompe à vide selon la revendication 9,
**caractérisée en ce que**
l'unité de commande (22) et l'ensemble de commutation sont conçus pour commuter entre au moins deux états de commutation différents de l'ensemble de commutation pendant le fonctionnement du moteur électrique, en fonction du régime de rotation du moteur électrique, de telle sorte que lors d'un premier régime de rotation, le moteur électrique fournit dans un premier état de commutation une puissance de moteur plus élevée et/ou un rendement plus élevé que dans un second état de commutation, et lors d'un second régime de rotation différent du premier régime de rotation, le moteur électrique fournit dans le second état de commutation une puissance de moteur plus élevée et/ou un rendement plus élevé que dans le premier état de commutation.

11. Procédé pour faire fonctionner une pompe à vide comportant un rotor (32) pourvu d'un arbre de rotor (36), un compartiment moteur (74) jusqu'à l'intérieur duquel s'étend l'arbre de rotor (36), et un moteur électrique qui est agencé dans le compartiment moteur (74) et qui est destiné à l'entraînement en rotation du rotor (32),
dans lequel
un rotor du moteur électrique est formé par l'arbre de rotor (36) et le moteur électrique comprend plusieurs bobines (10, 12) pour générer un champ magnétique d'entraînement, plusieurs conducteurs électriques (14, 16) qui comprennent au moins un conducteur électrique de phase (14), pour alimenter en courant les bobines (10, 12), et un ensemble de commutation pour connecter les bobines (10, 12) aux conducteurs électriques (14, 16), **caractérisé en ce que**
les bobines (10, 12) d'une paire de bobines sont agencées coaxialement l'une par rapport à l'autre et i) l'une à côté ou dans l'autre de manière à se chevaucher au moins partiellement en direction axiale ou ii) l'une directement à la suite de l'autre en direction axiale,
pendant le fonctionnement du moteur électrique, l'ensemble de commutation peut être commuté entre différents états de commutation dans lesquels les conducteurs électriques (14, 16) sont chacun connectés aux bobines (10, 12) en assurant l'alimentation en courant, les conducteurs électriques (14, 16) et les bobines (10, 12) étant interconnectés différemment dans les différents états de commutation, et
les conducteurs électriques (14, 16) et les bobines (10, 12) sont commutables entre un état de commutation à topologie en étoile et un état de commutation à topologie triangulaire.

12. Procédé selon la revendication 11,
**caractérisé en ce que**
l'état de commutation de l'ensemble de commutation est réglé en fonction du régime de rotation du moteur électrique.

13. Procédé selon la revendication 11 ou 12,
**caractérisé en ce que**
il s'effectue une commutation entre au moins deux états de commutation différents de l'ensemble de commutation en fonction du régime de rotation du moteur électrique, de telle sorte que dans différentes plages de régimes de rotation du moteur électrique, c'est celui des états de commutation respectifs qui est réglé qui assure une puissance de moteur plus élevé et/ou un rendement plus élevé que l'autre état de commutation, lors du régime de rotation respectif.
